# EUROPÄISCHE PATENTANMELDUNG

(11) **EP 2 524 725 A1**
(43) Veröffentlichungstag der Anmeldung: **21.11.2012**
(21) Anmeldenummer: 12003467.3
(22) Anmeldetag: 07.05.2012
(51) Int. Cl.: B01D 33/11, B01D 33/48, B01D 33/76, B01D 33/80

(54) **Vorrichtung zum Entfernen von Siebgut aus einer Flüssigkeit**

(30) Priorität: 19.05.2011 DE 102011102073
(71) Anmelder: Passavant-Geiger GmbH, 65326 Aarbergen (DE)
(72) Erfinder: Schultchen, Frank, 30890 Barsinghausen (DE)
(74) Vertreter: Jany und Petersen

(57) **Zusammenfassung**

Es wird eine Vorrichtung zum Entfernen von Siebgut aus einer Flüssigkeit (2), insbesondere Abwasser, mit einer drehbar gelagerten Siebtrommel (10) mit einem umfangsseitige Sieböffnungen aufweisenden Siebmantel (11), der zum Abscheiden von Siebgut von der Flüssigkeit (2) von innen nach außen durchströmt wird und mit einer Ablöseeinrichtung (50) mit Spritzwasser von außen nach innen abgespritzt wird, vorgeschlagen. Die Siebtrommel (10) wird über einen Antrieb (20) direkt angetrieben. Eine koaxial zur Siebtrommel (10) angeordnete Förderschnecke (36), die über einen Dreharm (13) an der Zulaufstirnseite (16) der Siebtrommel (10) angetrieben wird, schiebt das Siebgut durch eine Press- und Entwässerungseinrichtung (40) zum Abwurf (44).

## Beschreibung

Die Erfindung betrifft eine Trommelsiebmaschine zum Entfernen von Siebgut aus einer Flüssigkeit, insbesondere aus Abwasser, mit einer drehbar gelagerten Siebtrommel mit einem umfangsseitige Sieböffnungen aufweisenden Siebmantel, der zum Abscheiden von Siebgut von der Flüssigkeit von innen nach außen durchströmbar ist, wobei das abgeschiedene Siebgut mittels einer Ablöseeinrichtung mit Spritzwasser von außen nach innen abspritzbar ist.

Vorrichtungen zum Entfernen von Siebgut aus Flüssigkeiten mit schräg aufgestellter umlaufender Trommel mit umfangsseitigen Sieböffnungen sind bekannt, beispielsweise aus der DE 103 16 173 A1. Die bekannten Vorrichtungen ziehen mit der Förderschnecke einer Fördereinrichtung das Siebgut axial aus dem Bereich der Siebtrommel zu einem Abwurf. Angetrieben wird die Antriebswelle dieser Förderschnecke durch einen axial am Austrittsende der Fördereinrichtung, d.h. am Abwurf positionierten Getriebemotor. Die von dem Getriebemotor angetriebene Schneckenwelle versetzt durch eine Verbindung am Trommelflansch die Siebtrommel in eine Drehbewegung.

Bei der aus dem Stand der Technik bekannten Vorrichtung wird die Förderschnecke angetrieben und deren Drehbewegung wird mittels eines Dreharms auf die Siebtrommel übertragen. Sie weist also eine Siebtrommel auf, die mittels der Drehbewegung der direkt angetriebenen Förderschnecke und eines Dreharms, der eine drehfeste Verbindung zwischen der Förderschnecke und der Siebtrommel bildet, angetrieben wird. Das Siebgut wird mittels der Förderschnecke zu einem Abwurf gezogen, wobei sich der Antrieb an dem austrittseitigen Ende der Förderschnecke befindet und die Förderschnecke antreibt.

Dadurch, dass bei der bekannten ziehenden Ausführung die Förderschnecke angetrieben wird und nicht die Siebtrommel, ergibt sich der große Nachteil, dass durch den Abwurfbereich eine laufende angetriebene Antriebswelle verläuft. Hier kommt es immer wieder zu Verzopfungen des Siebgutes um die Antriebswelle und dadurch zum Verstopfen des Abwurfes.

Aus der DE 92 05 674 U1 ist eine weitere Fördereinrichtung bekannt, bei der die Förderschnecke angetrieben und deren Drehbewegung mittels eines Dreharms auf die Siebtrommel übertragen wird. Das Siebgut wird mittels der Förderschnecke zu einem Abwurf geschoben. Hierzu sind die erforderlichen Antriebselemente im stirnseitigen Zulaufbereich der Siebtrommel angeordnet. Dies ist nachteilig, weil sie sich in der mit Siebgut verschmutzten Flüssigkeit befinden und daher gegen Verschmutzung geschützt werden müssen. Ferner schiebt bei dieser bekannten Vorrichtung die Förderschnecke das Siebgut nicht achsparallel zur Siebtrommel zu einem in axialer Förderrichtung der Förderschnecke gelegenen Abwurf, sondern gegen den sich aufbauenden Pressballen zwischen dem Ende der Schneckenwendel und einer fest installierten Friktionsrohrleitung, die im Zulaufbereich einen aufwärts gerichteten Bogen und im Auslaufbereich einen abwärtsgerichteten Bogen aufweist. Dies hat ersichtlich den Nachteil, dass es eher zu Verstopfungen kommen kann und ein erhöhter Förderdruck, der einen geringeren Durchsatz zur Folge hat, erforderlich ist. Ausgehend von diesem Stand der Technik liegt der vorliegenden Erfindung die Aufgabe zugrunde, eine Vorrichtung der eingangs beschriebenen Art so weiterzubilden, dass die Funktionssicherheit erhöht wird.

Diese Aufgabe wird erfindungsgemäß durch eine Vorrichtung mit den Merkmalen des beigefügten Anspruchs 1 gelöst. Bevorzugte Ausgestaltungen und Weiterbildungen der Erfindung ergeben sich aus den nebengeordneten und abhängigen Ansprüchen und der nachfolgenden Beschreibung mit zugehörigen Zeichnungen.

Eine erfindungsgemäße Vorrichtung zum Entfernen von Siebgut aus einer Flüssigkeit, insbesondere aus Abwasser, mit einer drehbar gelagerten Siebtrommel mit einem umfangsseitige Sieböffnungen aufweisenden Siebmantel, der zum Abscheiden von Siebgut von der Flüssigkeit von innen nach außen durchströmbar ist, wobei das abgeschiedene Siebgut mittels einer Ablöseeinrichtung mit Spritzwasser von außen nach innen abspritzbar ist, weist die Besonderheit auf, dass sie einen Antrieb zum direkten Antreiben der Siebtrommel aufweist, eine Förderschnecke aufweist, die koaxial zur Siebtrommel angeordnet ist und die mittels der Drehbewegung der direkt angetriebenen Siebtrommel und eines Dreharms, der an der Zulaufstirnseite der Siebtrommel angeordnet ist und eine drehfeste Verbindung zwischen der Siebtrommel und der Förderschnecke bildet, antreibbar ist, eine axial angeordnete Fördereinrichtung aufweist, in der die Förderschnecke angeordnet ist, und mittels der Fördereinrichtung und der Förderschnecke in der Fördereinrichtung das Siebgut durch eine Press- und Entwässerungseinrichtung zu einem in axialer Förderrichtung der Förderschnecke gelegenen Abwurf schiebbar ist.

Die Besonderheiten der erfindungsgemäßen Vorrichtung betreffen einerseits den Antrieb der Förderschnecke, die erfindungsgemäß nicht direkt von einem Antrieb angetrieben wird, sondern mittels der Drehbewegung der direkt angetriebenen Siebtrommel und eines Dreharms, der die Drehbewegung der direkt angetriebenen Siebtrommel auf die Förderschnecke überträgt, angetrieben wird, sowie andererseits die axiale Anordnung der Fördereinrichtung mit der darin angeordneten Förderschnecke, mittels der das Siebgut in axialer Förderrichtung zu einem Abwurf geschoben wird.

Die erfindungsgemäße Vorrichtung weist eine Förderschnecke auf, die mittels der Drehbewegung einer direkt angetriebenen Siebtrommel und eines Dreharms, der eine drehfeste Verbindung zwischen der Siebtrommel und der Förderschnecke bildet, antreibbar ist. Die Siebtrommel wird direkt angetrieben und die Drehbewegung der direkt angetriebenen Siebtrommel wird mittels eines Dreharms, der eine drehfeste Verbindung zwischen der Siebtrommel und der Förderschnecke bildet, auf die Förderschnecke übertragen. Dadurch, dass bei der erfindungsgemäßen Vorrichtung das Siebgut mittels der Fördereinrichtung bzw. der Förderschnecke in der Fördereinrichtung zu einem Abwurf geschoben wird, wobei sich der Antrieb am Eintrittsende der Förderschnecke befindet und direkt die Siebtrommel antreibt, ergibt sich der Vorteil, dass es in der Fördereinrichtung weniger zu Verzopfungen des Siebgutes um die Antriebswelle der Förderschnecke und dadurch zum Verstopfen des Abwurfes kommt. Da die Fördereinrichtung achsparallel zur Siebtrommel verläuft, kommt es ebenfalls weniger zu Verstopfungen und es wird ermöglicht, das Siebgut mittels der Fördereinrichtung mit anschließender Presszone zu einem offenen Abwurf zu schieben, der in axialer Richtung zur Achse der Siebtrommel angeordnet ist, ohne dass durch den Abwurfbereich eine Antriebswelle verläuft, wobei der Abwurf gegebenenfalls in axialer Richtung offen sein kann.

Die Erfindung wird nachfolgend anhand in den Figuren dargestellter Ausführungsbeispiele näher erläutert. Die darin beschriebenen Besonderheiten können einzeln oder in Kombination miteinander eingesetzt werden, um bevorzugte Ausgestaltungen der Erfindung zu schaffen. Gleiche oder gleich wirkende Teile werden in den verschiedenen Figuren mit denselben Bezugszeichen bezeichnet und gewöhnlich nur einmal beschrieben, auch wenn sie bei anderen Ausführungsformen vorteilhaft eingesetzt werden können. Es zeigen:
- Fig. 1: Eine vereinfachte Seitenansicht einer erfindungsgemäßen Vorrichtung in einem Gerinne,
- Fig. 2: eine vereinfachte Seitenansicht zu Figur 1 ohne Fördereinrichtung,
- Fig. 3: eine vereinfachte Vorderansicht zu Figur 2,
- Fig. 4: eine erste Abwandlung zu Figur 2,
- Fig. 5: eine vereinfachte Vorderansicht zu Figur 4,
- Fig. 6: eine zweite Abwandlung zu Figur 2,
- Fig. 7: eine dritte Abwandlung zu Figur 2,
- Fig. 8: eine vereinfachte Darstellung einer einarmigen Ausführungsform eines Dreharmes,
- Fig. 9: eine vereinfachte Darstellung einer zweiarmigen Ausführungsform eines Dreharmes,
- Fig. 10: eine vereinfachte Darstellung einer dreiarmigen Ausführungsform eines Dreharmes,
- Fig. 11: eine vereinfachte Darstellung des Dreharmes von Figur 8 in einer ersten Position,
- Fig. 12: eine vereinfachte Darstellung des Dreharmes von Figur 8 in einer zweiten Position,
- Fig. 13: eine vereinfachte Darstellung des Dreharmes von Figur 8 in einer dritten Position und
- Fig. 14: eine vereinfachte Darstellung des Dreharmes mit daran anhaftendem Siebgut.

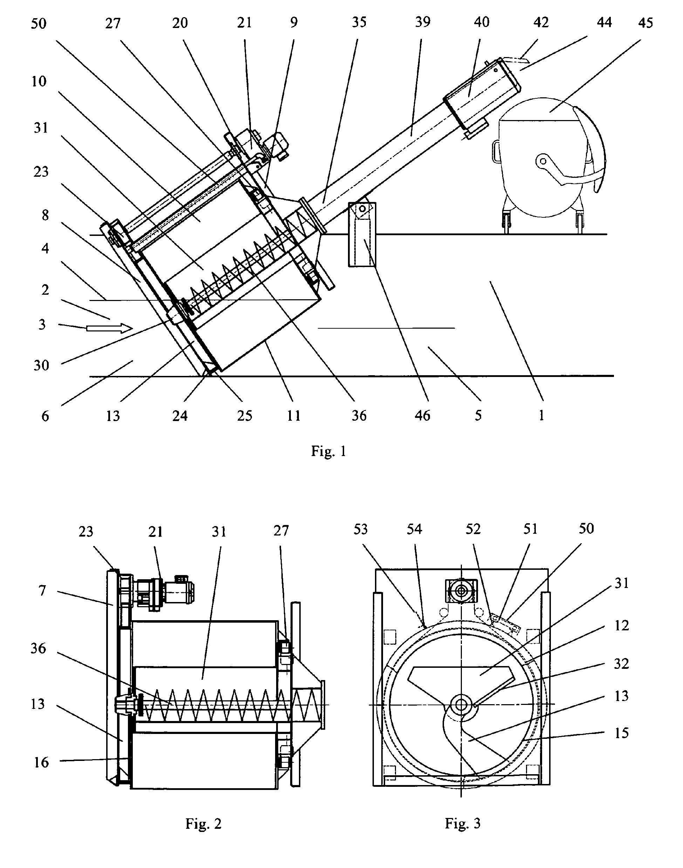

Die Figur 1 zeigt eine vereinfachte Seitenansicht einer erfindungsgemäßen Vorrichtung zum Entfernen von Siebgut aus einer Flüssigkeit 2. Dargestellt ist ein Ausschnitt eines Gerinnes 1, in dem eine mit Siebgut versetzte Flüssigkeit 2 in Fließrichtung 3 bis zu einem Wasserstand 4 strömt. Die Fließrichtung 3 der Flüssigkeit 2 bestimmt die Zulaufseite 6 und die Ablaufseite 5. Es ist auch möglich, die Vorrichtung außerhalb eines Gerinnes, beispielsweise in einem Behälter einzusetzen.

Die Siebtrommel 10 ist drehbar gelagert und umfasst einen umfangsseitige Sieböffnungen aufweisenden Siebmantel 11. Die Siebtrommel 10 kann beispielsweise als Lochsiebtrommel, als Spaltsiebtrommel oder als Maschensiebtrommel ausgeführt sein. Die beispielhaften Geometrien der umfangsseitigen Sieböffnungen des Siebmantels 11 der Lochsiebtrommel können rechteckige, runde oder polygone Formen aufweisen.

Die Trommelsiebmaschine wird vorzugsweise schräg in ein Gerinne 1 gestellt, wobei die Frontwand 8 entgegen der Fließrichtung 3 gerichtet ist. Die Vorrichtung ist also vorzugsweise mit der Trommelsiebachse schräg zum Gerinneboden aufgestellt, wobei der Winkel zum Gerinneboden bevorzugt ca. 35° beträgt. Die Vorrichtung ist gelagert durch die Frontwand 8 des Gestells 7 und eine oder mehrere Stützen 46 an der Fördereinrichtung 39.

Durch die stirnseitige Frontöffnung 15 strömt die Flüssigkeit 2 auf den Siebmantel 11, wobei das entsprechende Siebgut abgeschieden und mit einer Ablöseeinrichtung 50 mit Spritzwasser von außen nach innen in einen Trichter 31 zum Auffangen von Siebgut gespritzt wird, der sich über einer koaxial zur Siebtrommel 10 angeordneten Förderschnecke 36 befindet. Ein an der Zulaufstirnseite 16 der Siebtrommel 10 angeordneter Dreharm 13 bildet eine drehfeste Verbindung zwischen Siebtrommel 10 und Förderschnecke 36. Die Förderschnecke 36 wird über den Dreharm 13 angetrieben und schiebt das Siebgut durch eine Press- und Entwässerungseinrichtung 40 zum Abwurf 44. Die Abwurfhöhe ist so ausgeführt, dass ein auf dem Flurboden stehender Container 45 unter die Abwurfstelle 44 passt.

Die Abwurfhöhe ist variabel und bestimmt die Länge der Fördereinrichtung 39. In jedem Fall ist die Abwurfhöhe des Siebgutes oberhalb des höchsten Wasserstandes 4. Der Abwurf 44 weist in axialer Förderrichtung der Förderschnecke 36 bzw. der Fördereinrichtung 39 eine Öffnung auf. Die Öffnung ist vorzugsweise rund, wobei ihr Innendurchmesser dem Außendurchmesser der Förderschnecke 36 entspricht.

Erfindungsgemäß ist die Siebtrommel 10 eine direkt angetriebene Siebtrommel 10, die über einen Dreharm 13 eine Förderschnecke 36 antreibt, die das Siebgut durch eine Press- und Entwässerungseinrichtung 40 zum Abwurf 44 schiebt. Koaxial zur Siebtrommel 10 ist die Förderschnecke 36 angeordnet, die durch einen Dreharm 13, an der Zulaufstirnseite 16 der Siebtrommel 10, eine drehfeste Verbindung zur Siebtrommel 10 aufweist. Die Förderschnecke 36 wird über den Dreharm 13 durch die Drehbewegung der Siebtrommel 10 angetrieben. Auf Siebtrommellänge befindet sich über der Fördereinrichtung 39 ein Trichter 31 zur Aufnahme des Siebgutes. Die Förderschnecke 36 in der Fördereinrichtung 39 schiebt das Siebgut zum Abwurf 44.

Abgeschiedenes Siebgut wird mittels der axial angeordneten Fördereinrichtung 39 durch eine Press- und Entwässerungseinrichtung 40 zum Abwurfbereich geschoben. Die Fördereinrichtung 39 ist vorzugsweise als Schneckenpresse 35 ausgebildet, sodass die Förderschnecke 36 das Siebgut durch eine Press- und Entwässerungseinrichtung 40, gegen eine Gegendruckklappe 42, zum Abwurf 44 schiebt. Die Press- und Entwässerungseinrichtung 40 ist vorzugsweise wie bei der bekannten Passavant-Geiger Noggerath Spiralpresse SPR ausgeführt, kann aber beispielsweise auch wie bei dem bekannten Passavant-Geiger Noggerath Spiralsieb NSI ausgeführt sein.

Eine Ablöseeinrichtung 50 ist außerhalb des Siebmantels 11, über dem höchsten Wasserstand 4, positioniert. Diese ist vorzugsweise mit einer Spritzleiste mit Düsen ausgebildet und am Gestell 7 befestigt. Das Spritzwasser löst das anhaftende Siebgut auf der Innenseite des Siebmantels 11 ab.

Die Siebtrommel 10 ist über die Stützrollen 27 und dem Frontlager 30 am Trichter 31 in einem Gestell 7 drehbar gelagert. Die Siebtrommel 10 wird von einem Antrieb 20, der einen Getriebemotor 21 und ein den Getriebemotor 21 mit der Siebtrommel 10 verbindendes Antriebselement 23 umfasst, in Drehbewegung versetzt. Der Getriebemotor 21 ist vorzugsweise am Gestell 7 befestigt ist. Die Siebtrommel 10 wird von dem Getriebemotor 21 direkt über das Antriebselement 23 angetrieben, d.h. das Drehmoment des Antriebsmotors 21 wird über das Antriebselement 23 am Außendurchmesser der Siebtrommel 10 direkt in die Siebtrommel 10 geleitet. Dadurch können der Antriebsmotor 21 und gegebenenfalls auch das Antriebselement 23 außerhalb der mit Siebgut verschmutzten Flüssigkeit 2 angeordnet sein und müssen nicht gegen Verschmutzung durch die Flüssigkeit 2 geschützt werden. Der Zulauf an der Trommelstirnseite kann von Antriebsmotor und Antriebselementen frei gehalten werden. Das Antriebselement 23 kann vorrangig als Zahnriementrieb, als Stirn-Zahnradpaar oder als Kettentrieb ausgeführt sein. Der Getriebemotor 21 kann an der Frontwand 8 positioniert werden und das Antriebselement 23 direkt antreiben, oder der Getriebemotor 21 kann an der Rückwand 9 positioniert werden und das Antriebselement 23 über eine gelagerte Antriebswelle 22 antreiben.

Die dargestellte Vorrichtung weist ein Gestell 7 und einen Getriebemotor 21 zum Antreiben der Siebtrommel 10 auf, wobei die Siebtrommel 10 über ein Antriebselement 23 von dem Getriebemotor 21, der am Gestell 7 befestigt ist, direkt in Drehbewegung versetzbar ist. Die Siebtrommel 10 wird über ein Antriebselement 23 von dem Getriebemotor 21, der am Gestell 7 befestigt ist, in Drehbewegung versetzt. Das Antriebselement 23 ist als Zahnriementrieb dargestellt. Der Getriebemotor 21 ist an der Rückwand 9 positioniert und treibt das Antriebselement 23 über eine gelagerte Antriebswelle 22 an.

Die koaxial zur Siebtrommel 10 angeordnete Förderschnecke 36 ist mittels eines Dreharms 13, der an der Zulaufstirnseite 16 der Siebtrommel 10 angeordnet ist und eine drehfeste Verbindung zwischen der Siebtrommel 10 und dem Dreharm 13 bildet, antreibbar. Der Dreharm 13, mittels dessen die Förderschnecke 36 in Drehbewegung versetzbar ist, ist an der Zulaufstirnseite 16 der Siebtrommel 10 angeordnet. Die Förderschnecke 36 bzw. die Fördereinrichtung 39 wird mittels der direkt angetriebenen Siebtrommel 10 und des Dreharms 13 in Drehbewegung gesetzt.

Die Figur 2 zeigt eine vereinfachte Seiten- und Figur 3 eine vereinfachte Vorderansicht der Vorrichtung ohne Fördereinrichtung. Dargestellt ist hier eine Antriebsausführung, bei der der Getriebemotor 21 an der Frontwand 8 positioniert ist und ein Antriebselement 23 direkt antreibt. Das Antriebselement 23 ist hier als Zahnriementrieb dargestellt. Eine Ablöseeinrichtung 50 ist außerhalb des Siebmantels 11 positioniert und mit einer Spritzleiste und Düsen ausgebildet und am Gestell 7 befestigt.

Der Dreharm 13 an der Siebtrommel 10 kann beispielsweise einarmig, zweiarmig oder dreiarmig ausgeführt sein. In Figur 3 ist der Dreharm 13 an der Siebtrommel 10 einarmig dargestellt. Auf der Innenseite des Siebmantels 11 sind Mitnehmer 12 zum Transportieren des Siebgutes entlang der Drehrichtung der Siebtrommel 10 angeordnet. Diese Mitnehmer 12 können flache, teilweise durchbrochene oder kammerartige Formen aufweisen und sind vorzugsweise parallel zur Siebtrommeldrehachse angeordnet. In Figur 3 weisen die Mitnehmer 12 auf der Innenseite des Siebmantels 11 flache, kammerartige Formen auf.

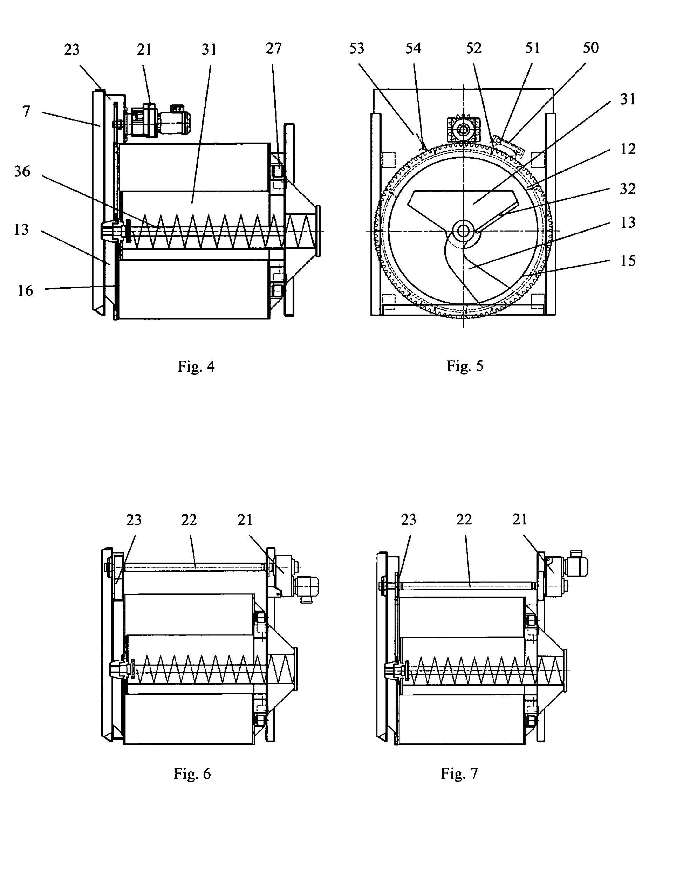

Die Figur 4 zeigt eine vereinfachte Seiten- und Figur 5 eine vereinfachte Vorderansicht der Vorrichtung ohne Fördereinrichtung. Dargestellt ist hier eine Antriebsausführung, bei der der Getriebemotor 21 an der Frontwand 8 positioniert ist und ein Antriebselement 23 direkt antreibt. Das Antriebselement 23 ist hier als Stirn-Zahnradpaar dargestellt. Der Dreharm 13 an der Zulaufstirnseite 16 der Siebtrommel 10 ist hier einarmig 70 dargestellt. Die Mitnehmer 12 auf der Innenseite des Siebmantels 11 weisen hier flache, durchbrochene Formen auf. Eine Ablöseeinrichtung 50 ist außerhalb des Siebmantels 11 positioniert und mit einer Spritzleiste 51 und Düsen 52 ausgebildet und am Gestell 7 befestigt. Eine Reinigungseinrichtung 53 ist mit einer Bürste 54 ausgebildet und am Gestell 7 befestigt.

Die Figur 6 zeigt eine vereinfachte Seitenansicht der Vorrichtung ohne Fördereinrichtung. Dargestellt ist hier eine Antriebsausführung, bei der der Getriebemotor 21 an der Rückwand 9 positioniert ist und über eine gelagerte Antriebswelle 22 das Antriebselement 23 antreibt. Das Antriebselement 23 ist hier als Zahnriementrieb dargestellt.

Die Figur 7 zeigt eine vereinfachte Seitenansicht der Vorrichtung ohne Fördereinrichtung. Dargestellt ist hier eine Antriebsausführung, bei der der Getriebemotor 21 an der Rückwand 9 positioniert ist und über eine gelagerte Antriebswelle 22 das Antriebselement 23 antreibt. Das Antriebselement 23 ist hier als Stirn-Zahnradpaar dargestellt.

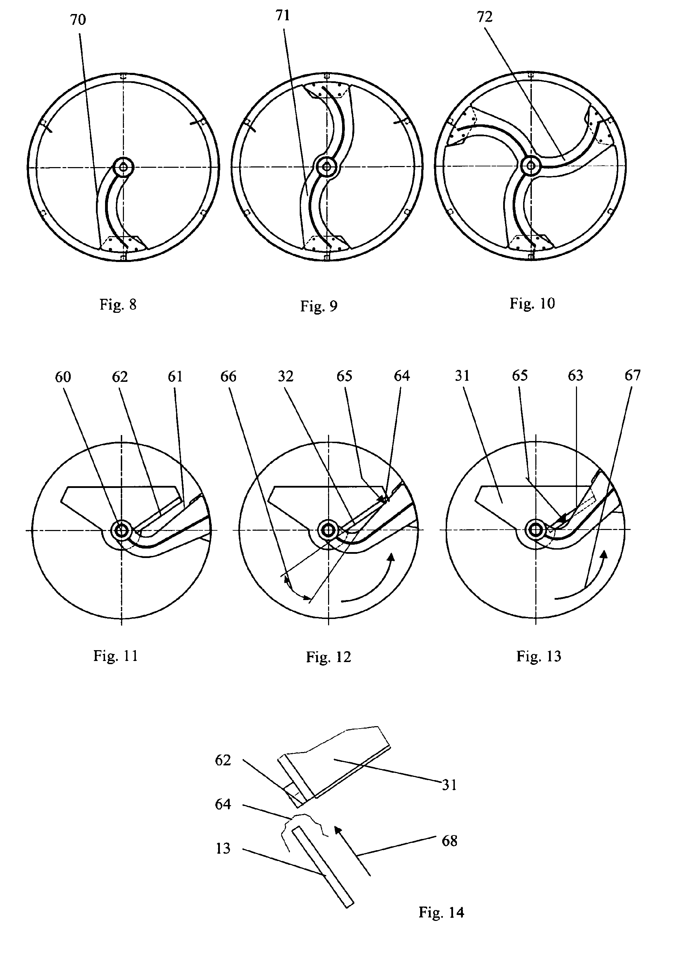

Die Figuren 8 bis 10 zeigen vereinfachte Darstellungen der Ausführungsformen des Dreharmes 13 an der Siebtrommel 10. Der Dreharm 13 kann vorzugsweise einarmig 70 (Figur 8), zweiarmig 71 (Figur 9) oder dreiarmig 72 (Figur 10) ausgeführt sein.

Die Figuren 11 bis 13 zeigen eine vereinfachte Darstellung des Dreharmes 13 in drei zeitlich aufeinanderfolgenden Positionen beim Vorbeifahren an einer Trichterkante 62. Bevorzugt weist die Vorrichtung eine Scherschiene 32 auf, die mit der Kontur des Dreharmes 13 eine Scherschienenkante 62 bildet, durch die bei der Drehbewegung des Dreharmes 13 an dem Dreharm 13 anhaftendes Siebgut von dem Dreharm 13 abgelöst wird. Vorteilhafterweise ist die Scherschiene 32 an dem Ende des Trichters 31 angeordnet, das sich im Bereich der Zulaufstirnseite 16 der Siebtrommel 10 befindet oder dieser nahe liegt.

Bei einer geraden Geometrie oder Kontur des Dreharmes 13 könnte es dabei nachteilig sein, dass es zum Verklemmen des Siebgutes zwischen Dreharmkante und Trichterkante am äußeren Durchmesser des Dreharmumlaufes kommen kann, wenn der Dreharm 13 eine gerade Seitenkante aufweist und somit das Siebgut an der Trichterkante bzw. Scherschienenkante 62 zum äußeren Durchmesser des Dreharmumlaufes schiebt und hier die Scherkraft auf das Siebgut aufgrund des größeren Hebelarmes kleiner wird.

Der Dreharm 13 wird daher in bevorzugten Ausführungsformen derart gestaltet, dass das am Dreharm 13 anhaftende Siebgut an der Scherschiene 32 am Trichter 31 mit hoher Scherkraft vom Dreharm 13 abgelöst wird. Hierzu kann vorgesehen sein, dass der Dreharm 13 eine geometrisch gestaltete, gekrümmte Kontur 61 aufweist, die beim Vorbeifahren an der Scherschienenkante 62 am Trichter 31 das an dem Dreharm 13 anhaftende Siebgut 64 entlang einer Scherschiene 32 in Richtung Trommelzentrum 60 schiebt und das Siebgut 64 mit einer hohen Scherkraft 65 von dem Dreharm ablöst. Die Kontur des Dreharmes 13 ist so gestaltet, dass bei stirnseitiger Betrachtung, die Scherschienenkante 62 und die Dreharmkante 61 beim Zusammentreffen in Folge der Drehung des Dreharmes 13 in Drehrichtung 67 einen in Richtung Trommelzentrum 60 sich öffnenden Winkel 66 bilden. Der in die Ansichten der Figuren 11 bis 13 projizierte Schnittpunkt 63 dieser beiden Kanten bewegt sich in Folge der Drehung des Dreharmes 13 in Drehrichtung 67 in Richtung Trommelzentrum 60. Hier wirkt jetzt eine höhere Scherkraft 65 auf an dem Dreharm 13 anhaftendes Siebgut 64. Die hohe Scherkraft wird durch das Drehmoment und den kurzen Hebelarm zum Drehmittelpunkt (Trommelzentrum 60) erzeugt.

Die Figur 14 zeigt eine vereinfachte Schnittdarstellung des Dreharmes 13 mit daran anhaftendem Siebgut 64 kurz vor dem Vorbeifahren, in Bewegungsrichtung 68, an der Scherschienenkante 62 des Trichters 31.

### Bezugszeichenliste

- 1: Gerinne
- 2: Flüssigkeit
- 3: Fließrichtung
- 4: Wasserstand
- 5: Ablaufseite
- 6: Zulaufseite
- 7: Gestell
- 8: Frontwand
- 9: Rückwand
- 10: Siebtrommel
- 11: Siebmantel
- 12: Mitnehmer
- 13: Dreharm
- 15: Frontöffnung
- 16: Zulaufstirnseite
- 20: Antrieb
- 21: Getriebemotor
- 22: Antriebswelle
- 23: Antriebselement
- 24: Antriebselement
- 25: Antriebselement
- 27: Stützrollen
- 30: Frontlager
- 31: Trichter
- 32: Scherschiene
- 35: Schneckenpresse
- 36: Förderschnecke
- 39: Fördereinrichtung
- 40: Press- und Entwässerungseinrichtung
- 42: Gegendruckklappe
- 44: Abwurf
- 45: Container
- 46: Stütze
- 50: Ablöseeinrichtung
- 51: Spritzleiste
- 52: Düsen
- 53: Reinigungseinrichtung
- 54: Bürste
- 60: Trommelzentrum
- 61: Kontur am Dreharm
- 62: Scherschienenkante
- 63: Schnittpunkt Dreharm- und Scherschienenkante
- 64: Siebgut anhaftend am Dreharm
- 65: Scherkraft
- 66: Winkel
- 67: Drehrichtung
- 68: Bewegungsrichtung
- 70: Dreharm Ausführung einarmig
- 71: Dreharm Ausführung zweiarmig
- 72: Dreharm Ausführung dreiarmig

## Patentansprüche

1. Vorrichtung zum Entfernen von Siebgut aus einer Flüssigkeit (2), insbesondere aus Abwasser, mit einer drehbar gelagerten Siebtrommel (10) mit einem umfangsseitige Sieböffnungen aufweisenden Siebmantel (11), der zum Abscheiden von Siebgut von der Flüssigkeit (2) von innen nach außen durchströmbar ist, wobei das abgeschiedene Siebgut mittels einer Ablöseeinrichtung (50) mit Spritzwasser von außen nach innen abspritzbar ist,
**dadurch gekennzeichnet, dass**
sie einen Antrieb (20) zum direkten Antreiben der Siebtrommel (10) aufweist,
eine Förderschnecke (36) aufweist, die koaxial zur Siebtrommel (10) angeordnet ist und die mittels der Drehbewegung der direkt angetriebenen Siebtrommel (10) und eines Dreharms (13), der an der Zulaufstirnseite (16) der Siebtrommel (10) angeordnet ist und eine drehfeste Verbindung zwischen der Siebtrommel (10) und der Förderschnecke (36) bildet, antreibbar ist,
eine axial angeordnete Fördereinrichtung (39) aufweist, in der die Förderschnecke (36) angeordnet ist, und
mittels der Fördereinrichtung (39) und der Förderschnecke (36) in der Fördereinrichtung (39) das Siebgut durch eine Press- und Entwässerungseinrichtung (40) zu einem in axialer Förderrichtung der Förderschnecke (36) gelegenen Abwurf (44) schiebbar ist.

2. Vorrichtung nach Anspruch 1, **dadurch gekennzeichnet, dass** sie ein Gestell (7) und einen Getriebemotor (21) zum Antreiben der Siebtrommel (10) aufweist, wobei die Siebtrommel (10) drehbar in dem Gestell (7) gelagert ist und über ein Antriebselement (23) von dem Getriebemotor (21), der am Gestell (7) befestigt ist, direkt in Drehbewegung versetzbar ist.

3. Vorrichtung nach einem der vorhergehenden Ansprüche, **dadurch gekennzeichnet, dass** der Dreharm (13), mittels dessen die Förderschnecke (36) in Drehbewegung versetzbar ist, an der Zulaufstirnseite (16) der Siebtrommel (10) angeordnet ist.

4. Vorrichtung nach einem der vorhergehenden Ansprüche, **dadurch gekennzeichnet, dass** die Förderschnecke (36) das Siebgut zum Abwurf (44) schiebt.

5. Vorrichtung nach einem der vorhergehenden Ansprüche, **dadurch gekennzeichnet, dass** der Abwurf (44) in axialer Förderrichtung der Förderschnecke (36) eine Öffnung aufweist.

6. Vorrichtung nach dem vorhergehenden Anspruch, **dadurch gekennzeichnet, dass** die Öffnung rund ist und ihr Innendurchmesser dem Außendurchmesser der Förderschnecke (36) entspricht.

7. Vorrichtung nach einem der vorhergehenden Ansprüche, **dadurch gekennzeichnet, dass** sie einen Trichter (31) zum Auffangen von Siebgut aufweist.

8. Vorrichtung nach einem der vorhergehenden Ansprüche, **dadurch gekennzeichnet, dass** sie eine Scherschiene (32) aufweist, die mit der Kontur des Dreharmes (13) eine Scherschienenkante (62) bildet, durch die bei der Drehbewegung des Dreharmes (13) an dem Dreharm (13) anhaftendes Siebgut von dem Dreharm (13) abgelöst wird.

9. Vorrichtung nach den Ansprüchen 7 und 8, **dadurch gekennzeichnet, dass** die Scherschiene (32) an dem Ende des Trichters (31) angeordnet ist, das sich im Bereich der Zulaufstirnseite (16) der Siebtrommel (10) befindet oder dieser nahe liegt.

10. Vorrichtung nach Anspruch 8 oder 9, **dadurch gekennzeichnet, dass** die Kontur des Dreharmes (13) so gestaltet ist, dass die Scherschienenkante (62) und die Dreharmkante (61), bei stirnseitiger Betrachtung, beim Zusammentreffen in Folge der Drehung des Dreharmes (13) in seiner Drehrichtung (67), einen sich in Richtung Trommelzentrum (60) öffnenden Winkel (66) bilden und somit der projizierte Schnittpunkt (63) dieser beiden Kanten sich in Folge der Drehung des Dreharmes (13) in seiner Drehrichtung (67) in Richtung Trommelzentrum (60) bewegt, wobei eine hohe Scherkraft (65), durch den kurzen Hebelarm zum Trommelzentrum (60), auf an dem Dreharm (13) anhaftendes Siebgut (64) wirkt.
